# DEMANDE DE BREVET EUROPEEN

(11) **EP 1 676 814 A1**
(43) Date de publication de la demande: **05.07.2006**
(21) Numéro de dépôt: 05113017.7
(22) Date de dépôt: 28.12.2005
(51) Int. Cl.: C01G 23/00, C04B 35/462, H01B 3/12, H01G 4/12

(54) **Matériaux oxydes diélectriques**

(30) Priorité: 30.12.2004 FR 0453245
(71) Demandeur: STMICROELECTRONICS SA, 92120 Montrouge (FR)
(72) Inventeur: Brize, Virginie, 37000, Tours (FR); Gervais, Monique, 37270, Larcay (FR)
(74) Mandataire: de Beaumont, Michel

(57) **Abrégé**

L'invention concerne un matériau en oxyde diélectrique du type Ca_{0,25}Cu₀,₇₅TiO₃ ayant une constante diélectrique supérieure à 3 000.

## Description

### Domaine de l'invention

La présente invention concerne des poudres oxydes de matériaux à permittivité électrique élevée et un procédé de fabrication de celles-ci.

### Exposé de l'art antérieur

Les oxydes diélectriques sont susceptibles de nombreuses applications en raison de leur permittivité électrique théorique élevée, par exemple de 9 000 à 12 000 pour des céramiques du type Ca_{0,25}Cu_{0,75}TiO₃. Dans l'industrie électronique, de telles céramiques diélectriques sont susceptibles d'être utilisées en tant qu'isolants lors de la fabrication de condensateurs intégrés. Pour déposer une telle céramique sous forme d'une couche mince d'une épaisseur de l'ordre de 100 à 500 nm, on a proposé d'utiliser des procédés de bombardement d'une cible constituée par la céramique.

La synthèse par voie liquide de céramiques est décrite plus particulièrement dans le cas de céramiques de la famille de Ca_{0,25}Cu_{0,75}TiO₃ dans les articles "Polymeric citrate precursor route to the synthesis of the high dielectric constant oxide, CaCu₃Ti₄O₁₂" de P. Jha et al. publié dans Material Letters 57 (2003) 2443-2446 et "Synthesis of Cao,₂₅Cu_{O},₇₅TiO₃ and infrared characterization of role played by copper" de A. Hassini, M. Gervais et al., publié dans Materials Science and Engineering B87 (2001) 164-168. Cette synthèse s'effectue selon le procédé suivant.

Les différents constituants, cuivre, calcium et titane, sont mis en présence selon les proportions stoechiométriques Ca_{0,25}Cu_{0,75}Ti sous forme de précurseurs liquides tels que du nitrate de cuivre, du nitrate de calcium et du citrate de titane. Les précurseurs précédents sont mélangés avec un ou plusieurs monomères propres à provoquer une polymérisation bidirectionnelle, tels qu'un mélange d'acrylamide (ajouté dans une proportion de 6 % du volume total) et de N,N'-méthylbisacrylamide (ajouté dans une proportion de 3 à 3,5 % du volume total). La polymérisation est alors effectuée. Pendant la polymérisation, le mélange est chauffé à une température de l'ordre de 100°C et est généralement agité. En raison de la présence de cuivre, on introduit généralement un catalyseur tel que l'azoisobutyronitrile afin d'amorcer la polymérisation. Une fois la polymérisation achevée, au bout de 5 à 30 minutes en fonction du volume de la solution, on obtient un gel organique, parfois appelé gel "auxiliaire", dans lequel les cations sont piégés, figés. On procède alors à une cristallisation par une calcination sous ventilation à une température de l'ordre de 650 à 750°C pendant environ vingt heures. On obtient alors une poudre constituée de l'agrégation en feuillets de microstructures cristallines en lamelles. Cette poudre est ensuite mise en forme de barreau ou de pastille, de préférence en présence d'un liant tel que l'alcool polyvinylique (PVA) ou le polyéthylène glycol (PEG). Pour ce faire, on commence par briser les feuillets par une agitation en présence de billes de zircone et d'isopropanol, par l'enlèvement des billes et par un séchage propre à évaporer l'isopropanol. On ajoute à la poudre cristalline ainsi obtenue une faible quantité du liant et on sèche complètement le mélange dans un four à 200°C pendant une durée de quatre heures au minimum. Le produit sec résultant est mis en forme par pressage isostatique et frittage à 1000°C pendant une vingtaine d'heures.

La cible obtenue est utilisée comme source des espèces d'un dépôt en couche mince par bombardement. La constante diélectrique de la cible de CaCu₃Ti₄O₁₂ est mesurée et est comprise entre 700 et 3 000 comme cela est exposé dans l'article "Polymeric citrate precursor route to the synthesis of the high dielectric constant oxide, CaCu₃Ti₄O₁₂" de P. Jha et al. déjà cité.

La valeur extrême obtenue de 3 000 est très inférieure à la valeur théorique de la constante diélectrique d'un matériau du type Ca_{0,25}Cu_{0,75}TiO₃ comprise entre 9 000 et 12 000.

Les caractéristiques électriques dépendent en particulier de la densité et de la taille des grains de la céramique cible.

Un objet de la présente invention est de proposer un matériau oxyde du type Cao,₂₅Cu_{O},₇₅TiO₃ de constante diélectrique supérieure à 3 000.

Un autre objet de la présente invention est de proposer un tel matériau de constante diélectrique proche de 10 000.

Un autre objet de la présente invention est de proposer une telle cible ayant une taille de grain supérieure à celle des cibles classiques obtenues par synthèse par voie liquide.

Un autre objet de la présente invention est de proposer un procédé de fabrication d'une telle cible.

Un autre objet de la présente invention est de proposer un procédé de mise en forme d'une poudre oxyde diélectrique.

### Résumé de l'invention

Pour atteindre ces objets, la présente invention prévoit un matériau en oxyde diélectrique du type Cao,₂₅Cu_{O},₇₅TiO₃ ayant une constante diélectrique supérieure à 3 000.

Selon un mode de réalisation de la présente invention, la taille de grain du matériau est au moins égale à 2 µm.

La présente invention prévoit également un procédé de mise en forme d'un oxyde diélectrique, comportant les étapes suivantes :
calciner un gel ordinaire comportant les composants de l'oxyde et un polymère à une température minimale propre à obtenir un système cristallin ;
réduire en poudre le produit de la calcination ;
ajouter un liant liquide à la poudre ; et
sécher le mélange du liant et de la poudre et broyer le mélange pendant le séchage.

Selon un mode de réalisation de la présente invention, le procédé comporte en outre, après l'étape de séchage, un pressage isostatique et un frittage du produit séché.

Selon un mode de réalisation de la présente invention, l'étape de séchage comporte les étapes suivantes :
sécher partiellement le mélange à une température relativement réduite ; et
sécher complètement le mélange à une température relativement élevée.

Selon un mode de réalisation de la présente invention, la poudre oxyde est du type Ca_{0,25}Cu_{0,75}TiO₃, l'étape de calcination étant effectuée à 500°C pendant vingt heures, le liant étant l'alcool polyvinylique, le séchage partiel étant effectué en étuve à 60°C et le séchage complet étant effectué au four à 200°C pendant un minimum de quatre heures.

Selon un mode de réalisation de la présente invention, le broyage est effectué en continu pendant le séchage.

Selon un mode de réalisation de la présente invention, le broyage est effectué à intervalles réguliers pendant le séchage.

Ces objets, caractéristiques et avantages, ainsi que d'autres de la présente invention seront exposés en détail dans la description suivante de modes de réalisation particuliers faite à titre non-limitatif.

### Description détaillée

Selon un mode de réalisation de la présente invention, on fabrique une céramique de la famille de Cao,₂₅Cu_{O},₇₅TiO₃ sous forme de cible destinée à être bombardée pour déposer Ca_{0,25}Cu_{0,75}TiO₃ en couche mince de la façon suivante.

Des quantités stoechiométriques (Ca_{0,25}Cu_{0,75}TiO₃) de cuivre sous forme de nitrate de cuivre, de calcium sous forme de nitrate de calcium et de titane sous forme de citrate de titane sont mélangées avec de l'acrylamide et du N,N'-méthylbisacrylamide. La solution obtenue est d'une couleur bleu foncé. Les précurseurs sources de cuivre, de calcium et de titane peuvent être autres pour autant que le mélange résultant ne mette pas en jeu des réactions parasites autres que la réaction de polymérisation. De façon similaire, les monomères ajoutés peuvent être différents de l'acrylamide et du N,N'-méthylbisacrylamide pour autant qu'ils ne réagissent pas avec les précurseurs liquides de cuivre, de calcium et de titane et qu'ils permettent une polymérisation bidirectionnelle.

On chauffe à une température de l'ordre de 80°C pendant 3 à 5 minutes. On ajoute ensuite une solution de 6 g d'azoisobutyronitrile dans 120 g d'acétone. Le mélange est chauffé à 100°C pendant 5 à 30 minutes jusqu'à formation d'un gel organique auxiliaire détecté par sa couleur bleu-ciel.

On procède à une calcination à une température de seulement 500°C pendant vingt heures. La température de calcination choisie est la température minimale nécessaire pour obtenir un système cristallin, en deçà de laquelle on obtient après calcination un système amorphe. Le produit cristallisé résultant est réduit sous forme de poudre par introduction dans un dispositif mélangeur, par exemple un dispositif appelé Turbula, commercialisé par la société Bioblock sous la référence C32297, en présence de billes de zircone et d'isopropanol. On procède ensuite au retrait des billes et à un séchage de l'isopropanol sous extracteur par séchage à 60 °C pendant deux heures.

La poudre résultante est imprégnée d'un liant. La quantité de liant ajouté est choisie de façon à conférer au mélange une consistance pâteuse sans être liquide. Par exemple, pour une céramique Ca_{0,25}Cu_{0,75}TiO₃, pour une quantité de 1 g de poudre, on ajoutera 8 g d'alcool polyvinylique en solution à 5 % dans l'eau. De préférence, selon un mode de réalisation de la présente invention, le mélange est broyé pendant l'imprégnation.

La pâte résultante est partiellement séchée dans une étuve à 60°C. Selon un mode de réalisation de la présente invention, la pâte est broyée lors de ce séchage. Ce broyage peut être un broyage effectué à intervalles réguliers en dehors du four ou un broyage permanent dans un four équipé de façon appropriée. Dans le cas d'un broyage externe, la poudre est régulièrement sortie du four, broyée et remise au four. Par exemple, pour une quantité de 1 g de poudre avec 8 g d'alcool polyvinylique en solution à 5 % dans l'eau, le séchage est effectué pendant trente minutes avec des broyages intermédiaires toutes les deux minutes. Le séchage est interrompu avant que la pâte ne soit complètement sèche.

Le séchage est achevé à une température de 200°C au four pendant une durée de l'ordre de quatre heures au minimum. Lors de ce séchage, la poudre est de préférence également broyée, de façon continue ou intermittente, dans le four ou à l'extérieur.

Une fois la poudre complètement séchée, elle est mise en forme de pastille ou de barreau par pressage isostatique et frittage à 1000°C pendant vingt heures.

La céramique obtenue de type CaCu₃Ti₄O₁₂ présente une densité de l'ordre de 75 à 80 %, voire plus, pour une taille de grain moyenne de l'ordre de 3 à 4 µm avec une plage de variation de 2 µm, alors que le procédé classique décrit précédemment fournissait des céramiques ayant des densités de 70 à 98 % pour une taille de grain moyenne de 1 à 1,5 µm à 0,5 µm près. A densité égale, une céramique selon la présente invention présente avantageusement une taille de grain plus élevée.

La constante diélectrique de la céramique CaCu₃Ti₄O₁₂ est supérieure à 3 000. Par exemple, pour une cible ayant une densité de 80 % et une taille de grain de 4,1 ± 1,8 µm, la constante diélectrique est de l'ordre de 9 000 au lieu de 3 000 pour une céramique classique de même densité de 80 % mais ayant une taille de grain de seulement 1,3 ± 0,4 µm.

Bien entendu, la présente invention est susceptible de diverses variantes et modifications qui apparaîtront à l'homme de l'art. En particulier, les précurseurs utilisés dépendent du type de céramique recherché. De même, les monomères utilisés dépendent du polymère à former. De façon similaire, le liant ajouté à la poudre cristalline avant la mise en forme dépend de la céramique concernée. De façon générale, la suite d'étapes standard de mise en forme d'une cible céramique à partir d'une poudre oxyde est modifiée en prévoyant une calcination à la température minimale pour obtenir une poudre cristalline (non amorphe), puis un séchage partiel à température réduite après l'introduction d'un liant suivi d'un séchage à température plus élevée avant la mise en forme, les séchages de la poudre étant combinés à des broyages.

## Revendications

1. Matériau en oxyde diélectrique du type Ca_{0,25}Cu_{0,75}TiO₃ ayant une constante diélectrique supérieure à 3 000.

2. Matériau selon la revendication 1, dans lequel la taille de grain est au moins égale à 2 µm.

3. Procédé de mise en forme d'un oxyde diélectrique du type Ca_{0,25}Cu_{0,75}TiO₃, **caractérisé en ce qu'**il comporte les étapes suivantes :
calciner un gel ordinaire comportant les composants de l'oxyde et un polymère à une température minimale propre à obtenir un système cristallin ;
réduire en poudre le produit de la calcination ;
ajouter un liant liquide à la poudre ; et
sécher le mélange du liant et de la poudre et broyer le mélange pendant le séchage.

4. Procédé selon la revendication 3, comportant en outre, après l'étape de séchage, un pressage isostatique et un frittage du produit séché.

5. Procédé selon la revendication 3 ou 4, dans lequel l'étape de séchage comporte les étapes suivantes :
sécher partiellement le mélange à une température relativement réduite ; et
sécher complètement le mélange à une température relativement élevée.

6. Procédé selon la revendication 5, dans lequel l'étape de calcination étant effectuée à 500°C pendant vingt heures, le liant étant l'alcool polyvinylique, le séchage partiel étant effectué en étuve à 60°C et le séchage complet étant effectué au four à 200°C pendant un minimum de quatre heures.

7. Procédé selon l'une quelconque des revendications 3 à 6, dans lequel le broyage est effectué en continu pendant le séchage.

8. Procédé selon l'une quelconque des revendications 3 à 6, dans lequel le broyage est effectué à intervalles réguliers pendant le séchage.
